# EUROPEAN PATENT SPECIFICATION

(11) **EP 2 345 605 B1**
(45) Date of publication and mention of the grant of the patent: **03.04.2013**
(21) Application number: 11150868.5
(22) Date of filing: 13.01.2011
(51) Int. Cl.: B65G 1/04

(54) **Apparatus for automatically transferring packaged pharmaceutical products**
Vorrichtung zum automatischen Übertragen verpackter pharmazeutischer Produkte
Appareil de transfert automatique de produits pharmaceutiques conditionnés

(30) Priority: 14.01.2010 IT TO20100014
(43) Date of publication of application: 20.07.2011
(73) Proprietor: Bertero Technologies S.A.S. di Bertero Sebastiano, 12100 Cuneo (IT)
(72) Inventor: Bertero, Sebastiano, I-12100, CUNEO (IT)
(74) Representative: Fioravanti, Corrado

(56) References cited:
- EP-A2- 1 566 349
- DE-A1- 1 654 741
- DE-U1- 20 021 440
- FR-A1- 2 158 399
- JP-A- 6 305 514
- US-A- 5 674 040

## Description

The present invention relates to apparatus for automatically transferring packaged pharmaceutical products according to claim 1.

In the stores of modern pharmacies, use is made of Cartesian robots (also known as shelving rack feeders) which move in a corridor between two parallel facing shelving racks in which pharmaceutical products are stored in an orderly way in predetermined positions which are recorded in a computerized database. The data on the stocks are updated in real time as products ordered by the pharmacy are procured and as products are sold. The robot automatically transfers individual pharmaceutical products from an entry location, where the products arrive one at a time after they have been sorted, to the predetermined positions on the shelving racks. When the computerized system receives an order from the pharmacist to collect a product to be sold, the robot collects the requested product from the location where it is stored and sends it to an output location, generally at the top of a chute, from where the product travels to the pharmacist who has requested it. A number of output locations can be provided for the same number of chutes which convey the products to different areas of the pharmacy or of the sales counter.

The robot (or shelving rack feeder) generally comprises a vertical column mounted slidably along a rail fixed to the floor of the corridor between the two shelving racks. A horizontal table associated with a gripping device, usually of the suction or clamp type, is mounted in a vertically slidable way along the column. The table can rotate through 180° about a vertical axis, together with the gripping device, in order to move towards the edges of the shelving racks on one or other side of the central corridor. The gripping device accomplishes a horizontal extension or retraction motion to shift or draw the product from the table to the shelf or vice versa, as may be required.

The manipulator robots are required to deliver the products requested by the pharmacist as rapidly as possible, especially when the pharmacy is busy. In order to shorten the delivery time, use has been made of stores which each have three parallel shelving racks separated by two corridors, with a corresponding shelving rack feeder operating in each corridor.

Apparatus for transferring packaged products as defined in the preamble of claim 1 is known from FR 2 158 399 A1.

A primary object of the invention is to optimize the space available in a store, in order to reduce the overall dimensions of the store and/or increase the number of different pharmaceutical products that can be stored in any given store. Another object of the invention is to provide an apparatus for transferring packaged pharmaceutical products which is particularly fast. Another object of the invention is to reduce the costs associated with the energy consumed for the movement of the shelving rack feeder.

These and other objects and advantages, which will be made clearer below, are achieved according to the invention by an apparatus having the features in the appended claims.

A preferred but non-limiting embodiment of an apparatus according to the invention will now be described, and is illustrated schematically in the attached drawings, in which:
Figure 1 is a front view of an apparatus according to the invention, positioned in a corridor between two shelving racks;
Figure 2 is a side view of the apparatus of Figure 1 and of one of the shelving racks; some parts of the shelving rack have been omitted for the purposes of illustration;
Figure 3 is a plan view of the apparatus and of the shelving racks of Figure 1;
Figure 4 is an enlarged view of part of the apparatus of
Figure 1;

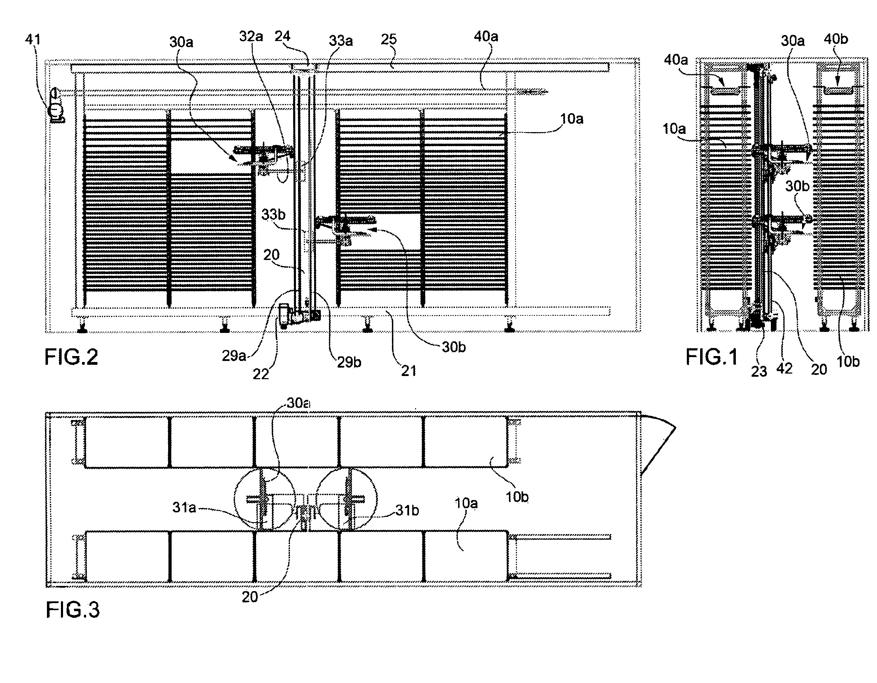

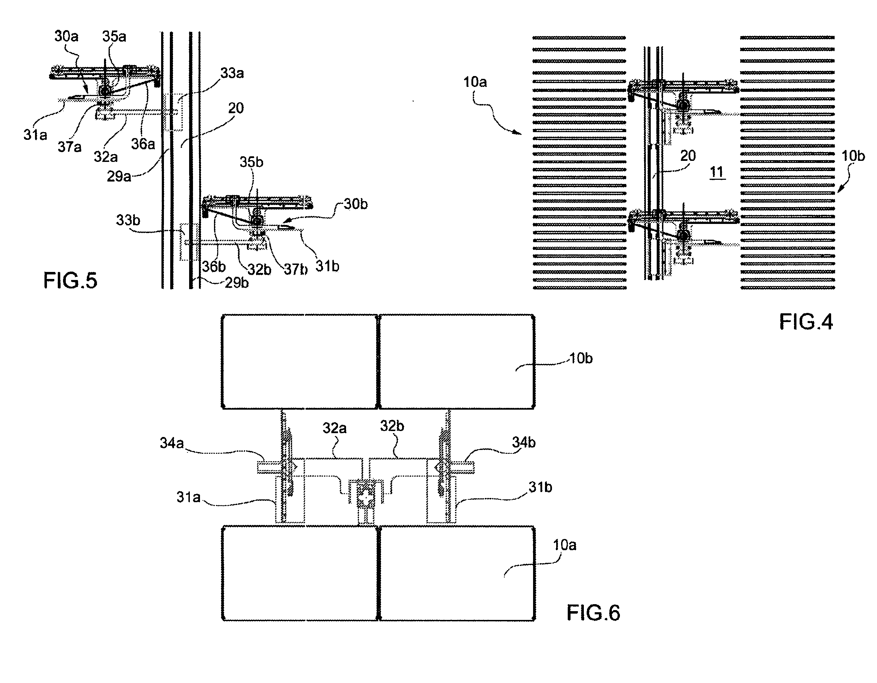

Figure 5 is an enlarged partial view of Figure 2;
Figure 6 is an enlarged partial view of Figure 3;

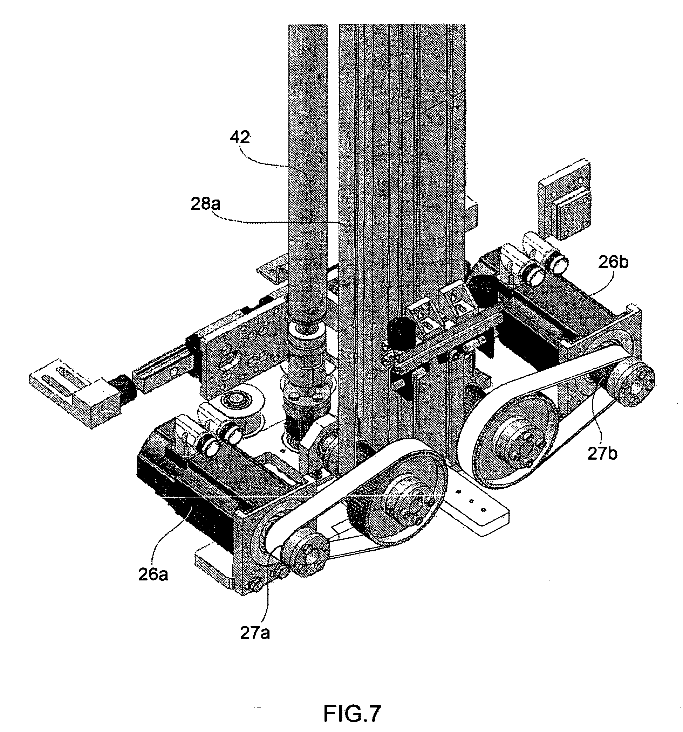

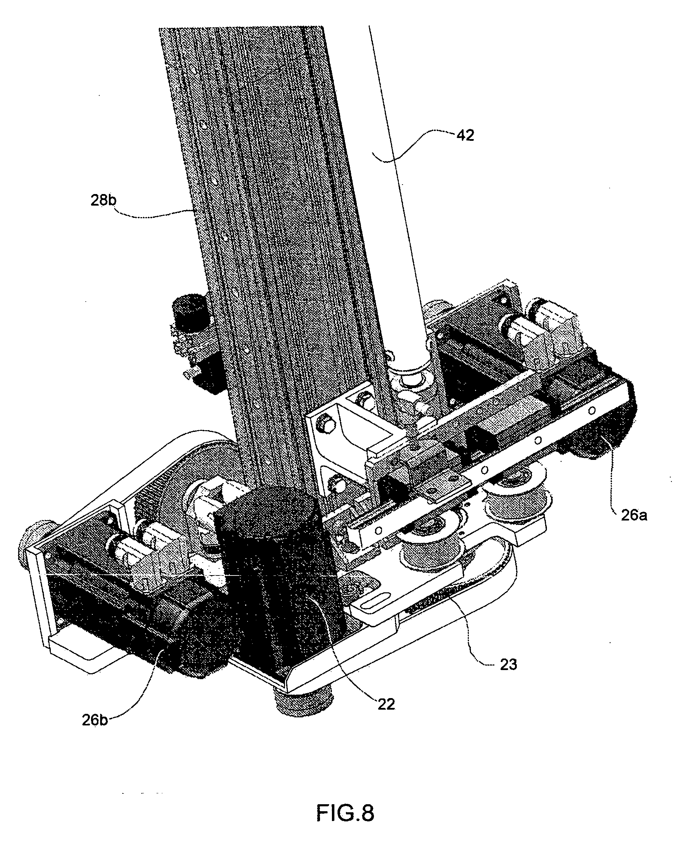

Figures 7 and 8 are perspective views, from different angles, of the lower part of a vertical column forming part of the apparatus, and

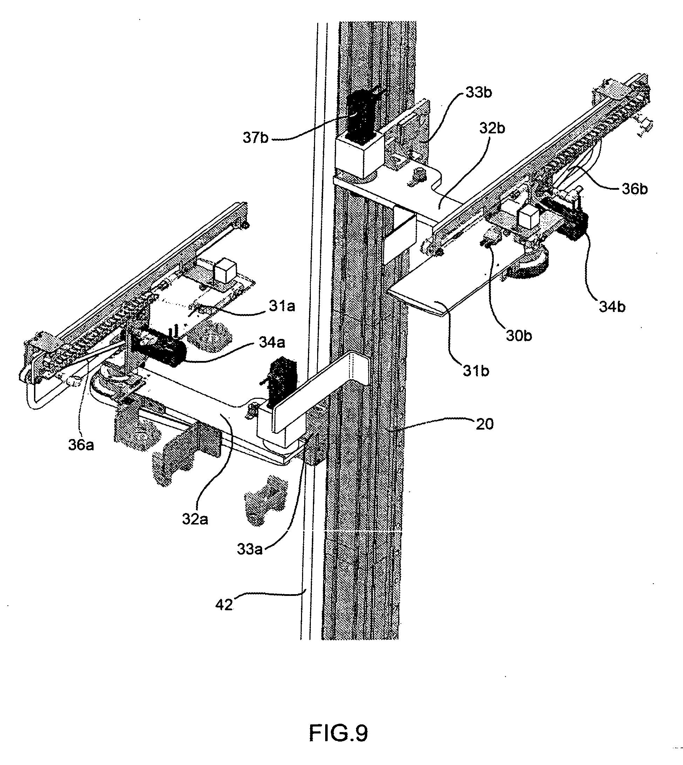

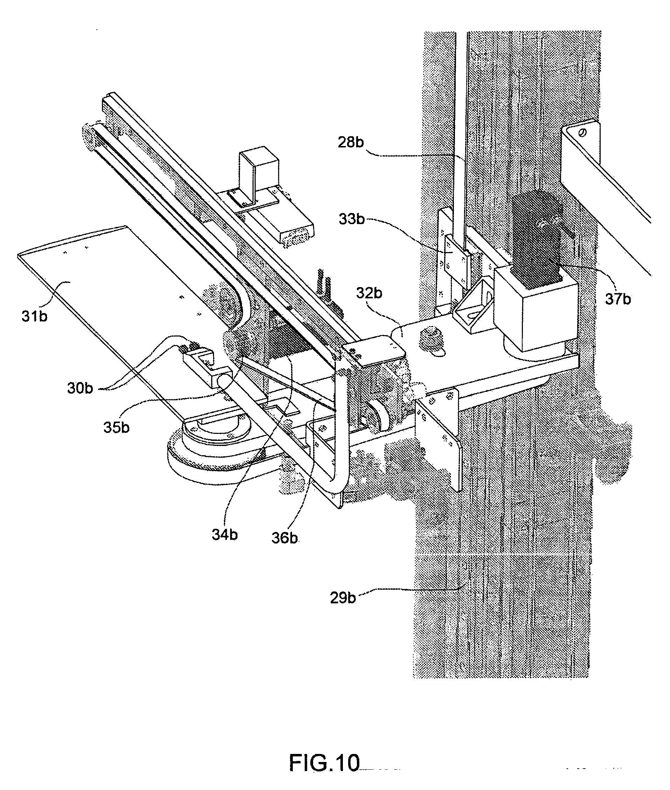

Figures 9 and 10 are perspective views of the gripping devices of the apparatus according to the invention.

Referring initially to Figures 1 to 3, the numerals 10a and 10b indicate two parallel shelving racks of the store of a pharmacy, separated by a central corridor 11. A Cartesian robot or rack feeder is installed in the corridor, and comprises a vertical column 20 whose foot is mounted in a longitudinally slidable way along a guide and support rail 21 which runs slightly above the floor of the corridor 11.

In the illustrated embodiment, the motion, defined here as longitudinal, of the column 20 along the rail 21 is provided by an electric motor 22 mounted on the lower part of the column. In a *per se* known manner, the motor 22 drives a cog wheel 23 (Figure 1) which engages with a fixed toothed belt (not shown in detail) running parallel to the rail 21. The operation of the electric motor 22 is controlled by an absolute encoder (not shown in detail) coupled to the cog wheel 23. In order to stabilize the column 20, the top of the column carries a carriage or slide 24 which engages with an overhead rail 25 parallel to the rail 21. In order to keep the column 20 vertical when it is accelerated along the rail 21, it is preferable to impart this translational motion to the upper part of the column as well. A vertical transmission shaft 42, parallel to the column 20, is provided for this purpose. The shaft 42 transfers the rotary drive motion from the cog wheel 23 to another, upper cog wheel (not shown) which engages with a fixed belt parallel to the overhead rail 25.

Two gripping devices 30a, 30b, controllable independently of each other, are mounted in a vertically slidable way along the column 20. Each gripping device, which does not differ appreciably from those of a known type, has a corresponding horizontal table 31a, 31b held projectingly by a respective support which includes a horizontal arm 32a, 32b fixed to a slide 33a, 33b. These slides are slidable along respective vertical parallel guides 29a, 29b fixed to the column 20. The independent motions of these two slides are produced, in the preferred embodiment, by respective electric motors 26a, 26b, each having an output shaft with a cog wheel 27a, 27b fixed to a respective encoder. Each of these cog wheels drives a corresponding transmission system for the vertical motion of the toothed belts 28a, 28b to which the slides 33a, 33b are secured.

Each table 31a, 31b, together with the respective gripping device 30a, 30b, can rotate through 180° (or more) about a respective vertical axis passing through the free end of the corresponding support arm 32a, 32b. These rotary motions are provided by further electric motors 37a, 37b, associated with each table, to make the tables rotate together with their gripping devices in order to bring the edges of the tables towards the shelves of one or other of the shelving racks 10a, 10b. The angular positions of each table with the associated gripping device are detected by respective angular encoders.

The gripping devices, which are preferably of the suction type, are controlled by movement means which can impart linear extension and retraction motions to the devices in horizontal directions defined herein as "transverse", in order to shift a product from the table towards the shelf or draw a product from the shelf and bring it on to the table of the rack feeder. In the preferred embodiment illustrated in the drawings, these movement means generally comprise electric motors 34a, 34b which drive cog wheels 35a, 35b with associated toothed belts 36a, 36b and position detection devices such as angular encoders (not shown) fixed with respect to rotation to the rotors of the electric motors.

A motor-driven conveyor 40a runs in the upper part of the shelving rack 10a and preferably extends over the whole length of the shelving rack and terminates in the vicinity of the top of a chute. The chute is not relevant for the purposes of the understanding of the invention and is therefore not illustrated here or described in detail. The products which the robot collects from the shelves and places on the conveyor 40a are thus delivered to the top of the chute, and from there to the pharmacy counter. In the particular embodiment illustrated in the drawings, there are two motor-driven conveyors 40a, 40b, one on top of each shelving rack 10a, 10b. It is advantageous to position the conveyors 40a, 40b at the top in order to have an adequate slope and length of the chute such that products are conveyed to the pharmacy counter by gravity alone. In a less preferred embodiment which is not shown in the drawings, a single conveyor is mounted in a position which is not aligned vertically with one of the shelving racks, in the upper part of the corridor for example.

The positioning of the conveyor or conveyors at the top of the corresponding shelving rack or racks, rather than halfway up them, is also advantageous in that there is no need to interrupt the uprights of the shelving racks to allow the passage of the conveyors.

Alongside the conveyors there are no uprights of the shelving rack which might interfere with the motion of the gripping devices which are extended and retracted transversely, even while the whole vertical column 20 is moving longitudinally along the rail.

The use of a suction method for gripping the products is particularly advantageous because it requires no additional movements or mechanical drives associated with the gripping means for taking hold of the product.

All the data on the linear and angular positions of the motor-driven parts described above are detected by means of the encoders and supplied to a processing and control unit, typically a PLC (Programmable Logic Controller) or a PC (Personal Computer), which controls the operation of the apparatus in its entirety, and therefore also controls the operation of all the other motor-driven members, actuators and encoders described herein. The unit updates the database which stores the data on stocks and on the positions of the products on the shelves of the store.

Owing to the presence of two gripping devices, movable independently along different guides on the same column 20, different products can be stored in the same position on a shelf of the store. These products are aligned one after the other in the horizontal direction, defined herein as transverse, that is to say in a perpendicular direction as viewed by an observer standing in the corridor and facing one of the two shelving racks.

When the computerized system receives the order to collect a given product from the store, the processing unit initially ascertains the availability of the requested product and retrieves from the database the coordinates of its location on the shelving racks. The robot is commanded to move along the rail 21, placing the column 20 in the proximity of the longitudinal position in which the requested product (product "A") is to be found.

If product A is the first of the row on the shelf, in other words if it is the product closest to the edge of the shelf, only one of the two gripping devices is actuated, by a known method. A slide, for example the slide 33a, is elevated along the column 20, bringing the table 31a to the level of the shelf where the product A is located. The table is rotated if necessary to bring it next to the edge of the shelf, and the suction gripping device is extended transversely towards the product A, is actuated to take hold of the product A, and is then retracted to draw the product A onto the table 31a. At this point, the slide 33a is elevated to the level of the conveyor 40a and the gripping device 30a is actuated again to shift the product A onto the conveyor. It should be noted that it is unnecessary to move the robot further along the rail 21 towards the output chute, because, when the product that has been collected arrives on the conveyor 40a, it is delivered by the conveyor to the chute, regardless of the position of the robot. The robot can therefore remain stationary in the position which it has reached while awaiting a new order.

On the other hand, if the requested product A is the second product on the shelf, and the first product, closer to the edge of the shelf, is a different product B, a first slide (for example the slide 33a) is moved; the corresponding gripping device 30a takes hold of the product B, places it on the table 31a, and moves to a position of non-interference, while the second gripping device 30b collects the product A and carries it onto the conveyor 40a (or 40b). As soon as the product A has been collected from the shelf, the first gripping device 30a can replace the product B in its original position on the shelf.

Because of the double gripping device, two or more products of different types can be stored in the same position on a shelf of the store. This makes it possible to reduce the number of shelves, or to increase the range of available products while maintaining the same capacity of the store, without the need to keep a quantity of products in the store in excess of the usual sorting volumes (which would be undesirable for financial reasons).

The rack feeder can collect and deliver two different products more rapidly than prior art systems. If two different requests for the collection of two products C and D are received simultaneously, or virtually simultaneously, the rack feeder moves along the rail 21 to collect one of them (for example the product C). As soon as the first gripping device has taken hold of the product C, it can be elevated to place the product C on any position of the conveyor, while the rack feeder moves along the rail and is placed in the proximity of the product D, which is gripped by the second gripping device. This eliminates two periods of down time which have conventionally been required in order to bring the first product collected from the shelf to the chute and then return to the shelf to collect the second product.

If the two requested products are stocked in positions which are both within the radius of operation of the gripping devices of the rack feeder, the column can be moved once only, if appropriate, to place it in a position in which both products C and D can be reached by the two gripping devices. If the orders arrive when the column is already in a position in which both products can be reached, there is no need for any movement along the rail, and two different products can be collected from the shelves simultaneously.

An advantage of the invention is that the rack feeder reduces the motions of the column 20 along the rail 21 to a minimum without the need to return to or from the delivery chute on each occasion. The column 20 carries out only the transfers that are strictly necessary to enable the gripping devices to reach the products on the shelves.

Similar advantages to those described above in respect of the operations of collecting products from the shelves are obtained in respect of the transfer of products from a loading position for storage on the shelves.

The conveyor 40a can be driven for circulation by a suitable electric motor 41 (Figure 2) in different ways, namely in an automatic way, following the input of a collection order, or as a result of a command received via a microswitch (not shown) located in the upper part of the column, which is switched when the corresponding slide has risen along the column and reached a height close to that of the conveyor. The operation of the conveyor can be continued for a predetermined period or can be interrupted by the passage of the product past a photocell (not shown) located at the point of delivery to the chute.

Admittedly, there are costs of installation and operation associated with a conveyor such as that indicated by 40a, but these costs are lower than those required to move a rack feeder forwards and backwards to and from one end of the corridor in order to deliver the product requested in each cycle to the chute. There are also advantages in terms of lower energy consumption for the movement of the conveyor, which has less inertia than the rack feeder as a whole. A further saving is achieved because of the reduced costs of maintenance and reduced wear on mechanical members as compared with conventional solutions, since the motions of the column along the rail can be reduced due to the double gripping device and due to the mechanical simplicity and reliability of the conveyor.

Although the present invention has been described and illustrated with reference to a store having two shelving racks separated by a single central corridor, the apparatus according to the invention can also be applied advantageously in a store having a single shelving rack instead of two, or having more than two shelving racks, for example three shelving racks separated by two corridors. The apparatus according to the invention can also be modified in respect of its shape, dimensions, arrangement of parts and structural and operational details. For example, it would be possible to choose other driving means for the controlled motion of the various members described herein, without departing from the scope of the invention as defined by the appended claims.

## Claims

1. Apparatus for automatically transferring packaged pharmaceutical products in a store comprising at least one shelving rack (10a, 10b), the apparatus including:
a rail (21) extending in a horizontal longitudinal direction alongside said shelving rack (10a, 10b);
a vertical column (20) slidably mounted along the rail (21) and coupled to longitudinal driving means (22, 23) for controlling the motion of the column (20) along the rail;
a first support (32a, 33a) slidably mounted along the column (20) and associated with first vertical driving means for controlling the motion of the first support along the column (20);
a first gripping device (30a), mounted on the first support (32a, 33a), and associated with first transverse driving means (34a, 35a, 36a) for accomplishing controlled linear motions in horizontal transverse directions in order to shift a pharmaceutical product onto a shelf or draw a pharmaceutical product from a shelf;
a second support (32b, 33b) slidably mounted along said column (20) and associated with second vertical driving means for controlling the motion of the second support along the column (20) independently of the motion of the first support;
a second gripping device (30b), mounted on the second support, and associated with second transverse driving means for accomplishing controlled linear motions, in horizontal transverse directions independently of the motion of the first gripping device, in order to shift a pharmaceutical product onto a shelf or draw a pharmaceutical product from a shelf;
**characterised in that** each gripping device (30a, 30b) is associated with a respective horizontal table (31a, 31b) rotatably mounted on one of said supports about a respective vertical axis and controlled for rotation by a respective motor (37a, 37b) in order to bring the table near to or away from the edges of the shelves; and that
the apparatus further comprises at least one motor-driven conveyor (40a, 40b) extending longitudinally and parallel to the rail (21), in order to transfer onto a chute the products the gripping devices (30a, 30b) draw from the shelving rack (10a, 10b).

2. Apparatus according to claim 1, **characterised in that** each of said supports includes a horizontal arm (32a, 32b) fixed to a slide (33a, 33b), these slides being slidable along respective vertical, parallel guides (29a, 29b) secured to the column (20).

3. Apparatus according to claim 1, **characterised in that** the conveyor (40a, 40b) is located at the top of the shelving rack (10a, 10b).

4. Apparatus according to claim 1 or 3, **characterised in that** the conveyor (40a, 40b) extends along the whole length of a shelving rack (10a, 10b).

5. Apparatus according to claim 3 or 4, **characterised in that** it comprises two motor-driven conveyors (40a, 40b) each mounted above a respective one of two parallel shelving racks (10a, 10b).

6. Apparatus according to any one of the preceding claims, **characterised in that** the gripping devices (30a, 30b) are suction gripping devices.

7. Apparatus according to any one of the preceding claims, **characterised in that** each gripping device (30a, 30b) is rotatable together with the associated horizontal table (31a, 31b) about said respective vertical axes.

## Patentansprüche

1. Vorrichtung zum automatischen Befördern von paketierten pharmazeutischen Produkten in einem Geschäft, aufweisend mindestens ein Fachbodenregal (10a, 10b), aufweisend:
eine Schiene (21), welche sich in einer horizontalen Längsrichtung entlang des Fachbodenregals (10a, 10b) erstreckt;
eine vertikale Säule (20), welche entlang der Schiene (21) verschiebbar befestigt ist und mit Longitudinalantriebsmitteln (22, 23) gekoppelt ist, um die Bewegung der Säule (20) entlang der Schiene (21) zu steuern;
eine erste Aufnahme (32a, 33a), welche entlang der Säule (20) verschiebbar befestigt ist und mit ersten Vertikalantriebsmitteln zum Steuern der Bewegung der ersten Aufnahme entlang der Säule (20) verbunden ist;
eine erste Greifvorrichtung (30a), welche an der ersten Aufnahme (32a, 33a) befestigt ist und mit ersten Transversalantriebsmitteln (34a, 35a, 36a) verbunden ist, zum Ausführen gesteuerter linearer Bewegungen in horizontal-transversalen Richtungen, um ein pharmazeutisches Produkt auf einen Regalboden zu schieben oder um ein pharmazeutisches Produkt von einem Regalboden zu ziehen;
eine zweite Aufnahme (32b, 33b), welche entlang der Säule (20) verschiebbar befestigt und mit zweiten Vertikalantriebsmitteln verbunden ist zum Steuern der Bewegung der zweiten Aufnahme unabhängig von der Bewegung der ersten Aufnahme entlang der Säule (20);
eine zweite Greifvorrichtung (30b), welche an der zweiten Aufnahme befestigt ist und mit zweiten Transversalantriebsmitteln verbunden ist, zum Ausführen gesteuerter linearer Bewegungen in horizontal-transversalen Richtungen unabhängig von der Bewegung der ersten Greifvorrichtung, um ein pharmazeutisches Produkt auf einen Regalboden zu schieben oder um ein pharmazeutisches Produkt von einem Regalboden zu ziehen,
**dadurch gekennzeichnet, dass**
jede Greifvorrichtung (30a, 30b) mit einem entsprechenden horizontalen Tisch (31a, 31b) verbunden ist, welcher an einer der Aufnahmen drehbar um eine entsprechende vertikale Achse befestigt ist und von einem entsprechenden Motor (37a, 37b) hinsichtlich der Rotation gesteuert wird, um den Tisch in die Nähe oder weg von den Kanten der Regalböden zu bewegen; und
die Vorrichtung weiterhin mindestens einen motor-betriebenen Förderer (40a, 40b) aufweist, welcher sich in Längsrichtung und parallel zu der Schiene (21) erstreckt, um die Produkte, welche die Greifvorrichtungen (30a, 30b) von dem Fachregalboden (10a, 10b) ziehen, auf eine Rutsche zu befördern.

2. Vorrichtung gemäß Anspruch 1, **dadurch gekennzeichnet, dass** jede der Aufnahmen einen horizontalen Arm (32a, 32b) aufweist, welcher an einem Schlitten (33a, 33b) befestigt ist, wobei diese Schlitten entlang entsprechender vertikaler, paralleler Führungen (29a, 29b), welche an der Säule (20) befestigt sind, gleiten können.

3. Vorrichtung gemäß Anspruch 1, **dadurch gekennzeichnet, dass** der Förderer (40a, 40b) an der Oberseite des Fachbodenregals (10a, 10b) angeordnet ist.

4. Vorrichtung gemäß einem der Ansprüche 1 oder 3, **dadurch gekennzeichnet, dass** sich der Förderer (40a, 40b) entlang der gesamten Länge eines Fachbodenregals (10a, 10b) ausdehnt.

5. Vorrichtung gemäß einem der Ansprüche 3 oder 4, **dadurch gekennzeichnet, dass** sie zwei motor-betriebene Förderer (40a, 40b) aufweist, wobei jeder über einem entsprechenden von zwei parallelen Fachbodenregalen (10a, 10b) befestigt ist.

6. Vorrichtung gemäß einem der vorangegangenen Ansprüche, **dadurch gekennzeichnet, dass** die Greifvorrichtungen (30a, 30b) Sauggreifvorrichtungen sind.

7. Vorrichtung gemäß einem der vorangegangenen Ansprüche, **dadurch gekennzeichnet, dass** jede Greifvorrichtung (30a, 30b) zusammen mit dem verbundenen horizontalen Tisch (31a, 31b) um die entsprechenden vertikalen Achsen herum drehbar ist.

## Revendications

1. Appareil de transfert automatique de produits pharmaceutiques conditionnés dans un entrepôt comprenant au moins une étagère (10a, 10b), l'appareil comprenant :
un rail (21) s'étendant dans une direction longitudinale horizontale le long de ladite étagère (10a, 10b) ;
une colonne verticale (20) montée de manière coulissante le long du rail (21) et couplée aux moyens d'entraînement longitudinaux (22, 23) pour contrôler le mouvement de la colonne (20) le long du rail ;
un premier support (32a, 33a) monté de manière coulissante le long de la colonne (20) et associé aux premiers moyens d'entraînement verticaux pour contrôler le mouvement du premier support le long de la colonne (20) ;
un premier dispositif de préhension (30a), monté sur le premier support (32a, 33a) et associé aux premiers moyens d'entraînement transversaux (34a, 35a, 36a) pour accomplir des mouvements linéaires contrôlés dans des directions transversales horizontales afin de déplacer un produit pharmaceutique sur une étagère ou retirer un produit pharmaceutique d'une étagère ;
un second support (32b, 33b) monté de manière coulissante le long de ladite colonne (20) et associé aux seconds moyens d'entraînement verticaux pour contrôler le mouvement du second support le long de la colonne (20) indépendamment du mouvement du premier support ;
un second dispositif de préhension (30b), monté sur le second support et associé aux seconds moyens d'entraînement transversaux pour accomplir des mouvements linéaires contrôlés, dans les directions transversales horizontales indépendamment du mouvement du premier dispositif de préhension, afin de déplacer un produit pharmaceutique sur une étagère ou retirer un produit pharmaceutique d'une étagère ;
**caractérisé en ce que** chaque dispositif de préhension (30a, 30b) est associé à un plateau horizontal respectif (31 a, 31 b) monté de manière rotative sur l'un desdits supports autour d'un axe vertical respectif et contrôlé en rotation par un moteur respectif (37a, 37b) afin d'amener le plateau prés des bords des étagères ou l'écarter de ceux-ci ; et **en ce que**
l'appareil comprend en outre au moins un convoyeur commandé par moteur (40a, 40b) s'étendant longitudinalement et parallèlement au rail (21), afin de transférer vers une goulotte les produits que les dispositifs de préhension (30a, 30b) retirent de l'étagère (10a, 10b).

2. Appareil selon la revendication 1, **caractérisé en ce que** chacun desdits supports comprend un bras horizontal (32a, 32b) fixé à un coulisseau (33a, 33b), les coulisseaux pouvant coulisser le long de guides parallèles verticaux respectifs (29a, 29b) fixés à la colonne (20).

3. Appareil selon la revendication 1, **caractérisé en ce que** le convoyeur (40a, 40b) est situé sur la partie supérieure de l'étagère (10a, 10b).

4. Appareil selon la revendication 1 ou 3, **caractérisé en ce que** le convoyeur (40a, 40b) s'étend sur l'ensemble de la longueur de l'étagère (10a, 10b).

5. Appareil selon la revendication 3 ou 4, **caractérisé en ce qu'**il comprend deux convoyeurs commandés par moteur (40a, 40b) montés chacun au-dessus de l'une des deux étagères parallèles respectives (10a, 10b).

6. Appareil selon l'une quelconque des revendications précédentes, **caractérisé en ce que** les dispositifs de préhension (30a, 30b) sont des dispositifs de préhension par aspiration.

7. Appareil selon l'une quelconque des revendications précédentes, **caractérisé en ce que** chaque dispositif de préhension (30a, 30b) peut tourner avec le plateau horizontal associé (31 a, 31 b) autour desdits axes verticaux respectifs.
